# FASCICULE DE BREVET EUROPEEN

(11) **EP 1 906 558 B1**
(45) Date de publication et mention de la délivrance du brevet: **07.10.2009**
(21) Numéro de dépôt: 07117045.0
(22) Date de dépôt: 24.09.2007
(51) Int. Cl.: H04B 7/185

(54) **Procédé et système de transmission de données entre un satellite et une station de base terrestre, satellite défilant, terminal relais et station de base.**
Verfahren und Anordnung zur Datenübertragung zwischen einem Satelliten und einer irdischen Station, niedrig fliegender Satellit, Relay-Endgerät und Basisstation
Method and system for data transmission between a satellite and a terrestrial base station, low orbit satellite, relay terminal and base station

(30) Priorité: 27.09.2006 FR 0608493
(43) Date de publication de la demande: 02.04.2008
(73) Titulaire: ASTRIUM SAS, 75016 Paris (FR)
(72) Inventeur: Michel, Cyril, 31130, FONSEGRIVES-TOULOUSE (FR)
(74) Mandataire: Cabinet Plasseraud

(56) Documents cités:
- WO-A-88/04866
- US-A- 6 160 994
- US-A1- 2001 045 494
- US-B1- 6 522 658

## Description

La présente invention est relative à la transmission de données entre une station de base terrestre et au moins un satellite en orbite, en particulier pour des satellites en orbite basse.

Plus particulièrement, l'invention concerne un procédé de transmission de données par radiocommunications ou liaisons radio-fréquence pour réaliser une communication d'un premier type entre au moins un terminal relais et une station de base, le terminal relais étant disposé sur un satellite défilant sur une première orbite, le procédé comprenant les étapes consistant à :
(a) émettre un signal de données par liaisons radio-fréquence depuis le terminal relais du satellite défilant vers un satellite de télécommunication disposé sur une seconde orbite d'altitude supérieure à la première orbite ;
(b) réceptionner ledit signal de données par liaisons radio-fréquence sur le satellite de télécommunication ;
(c) transmettre depuis le satellite de télécommunication vers la station de base ledit signal par liaisons radio-fréquence émis par le terminal relais.

Afin d'assurer la commande à distance de satellites depuis une station de base terrestre, ou pour recevoir à tout moment des données en provenance de satellites, il est nécessaire de mettre en place un réseau de télécommunication ayant une couverture suffisamment large autour de la Terre pour pouvoir contacter un satellite considéré à tout moment.

A cet effet, selon le document FR-A-2 756 439, un satellite défilant, c'est-à-dire sur une orbite basse (de l'ordre de 500 à 1000km) lui imposant une vitesse de rotation élevée, communique avec une station de base terrestre par l'intermédiaire d'un satellite sur une orbite plus élevée, en particulier un satellite géosynchrone, ou même géostationnaire. Par satellite géosynchrone, on entend un satellite dont la période de rotation autour de la Terre est égale à un jour. Un satellite géostationnaire est un satellite géosynchrone immobile pour un observateur posté sur la Terre.

Pour envoyer des données à la station de base, le satellite en orbite basse émet un signal de données en direction du satellite à une altitude supérieure, par exemple un satellite géosynchrone. Puis, ce satellite géosynchrone décode ce signal et émet à son tour un signal de données à la station de base. A cet effet, le satellite géosynchrone comprend une charge utile de télécommunication dédiée, avec une antenne de réception, servant éventuellement à l'émission. Cette antenne est généralement orientable, et est associée à un mécanisme de pointage pour diriger cette antenne vers le satellite défilant, ce qui permet d'assurer une communication continue entre ces deux entités, aussi longtemps qu'elles sont en vue l'un de l'autre.

Comme de très bonnes performances de transmission sont requises, le satellite géosynchrone comprend de plus des moyens de traitement de signal spécifiques puissants. Il est donc nécessaire de fortement spécialiser les charges utiles de ce type de satellite géosynchrone.

Le principal inconvénient de ce type de solution est le coût d'un tel satellite géosynchrone de relais. En effet, les performances requises pour ce type d'application ainsi que la mise en orbite géostationnaire engendrent un investissement très élevé pour ce type d'installation.

Il convient de noter que ce type de solution ne peut fonctionner correctement que s'il est mis en oeuvre avec au moins deux satellites géosynchrones, pour pouvoir assurer une couverture complète des satellites basses altitude.

La présente invention a notamment pour but de pallier ces inconvénients.

De plus, un but de la présente invention est d'établir une communication efficace entre un satellite défilant et une station de base sans nécessiter la mise en orbite d'un satellite géosynchrone dédié.

L'invention porte également sur un procédé de transmission de données permettant de diminuer le coût des installations requises pour mettre en oeuvre ce procédé.

Ainsi, la présente invention porte sur un procédé de transmission de données par liaisons radio-fréquence pour réaliser une communication d'un premier type entre au moins un terminal relais et une station de base, le terminal relais étant disposé sur un satellite défilant sur une première orbite, qui comprend les étapes consistant à :
(a) émettre un signal de données par liaisons radio-fréquence depuis le terminal relais du satellite défilant vers un satellite de télécommunication disposé sur une seconde orbite d'altitude supérieure à la première orbite ;
(b) réceptionner ledit signal de données par liaisons radio-fréquence sur le satellite de télécommunication ;
(c) transmettre depuis le satellite de télécommunication vers la station de base ledit signal par liaisons radio-fréquence émis par le terminal relais.

Selon une définition de l'invention, le procédé comprend de plus une étape (d) d'étalement de spectre appliqué par le terminal relais sur le signal de données par liaisons radio-fréquence préalable à l'étape (a) ; et une étape (e) de télécommunication, effectuée de manière simultanée avec au moins les étapes (b) et (c), entre le satellite de télécommunication et des unités terrestres, selon une communication d'un second type, distinct du premier type de communication, sans interférences avec la réception et la transmission du signal par liaisons radio-fréquence effectuées aux étapes (b) et (c) respectivement.

Grâce à ces dispositions, on peut effectuer des échanges de données entre un satellite défilant, en orbite basse et une station de base de manière efficace en limitant fortement les coûts d'installation. En effet, il n'est pas nécessaire de mettre en fonctionnement un satellite géostationnaire de relais pour une constellation de satellites défilants donnée. On peut en effet employer des satellites de télécommunication déjà en place.

Par satellites de télécommunication, on comprend des satellites sur des orbites hautes, notamment sur des orbites géosynchrones, et utilisés pour transmettre des informations d'un point à un autre de la Terre. Par exemple, il s'agit de satellites permettant la transmission de communications téléphoniques, ou encore de diffusion de canaux télévisuels reçus sur Terre par l'intermédiaire d'antennes paraboliques.

Pour se faire, il est essentiel de respecter le Règlement des Radiocommunications. Selon ce Règlement, l'usage de ce type de satellite de télécommunications en mode relais pour des satellites défilant n'est théoriquement pas autorisé sauf sous le régime de l'article 4 de ce Règlement . D'après cet article, il faut concevoir le terminal relais du satellite défilant pour que les signaux relayés par le satellite de télécommunications n'imposent pas de contraintes aux autres systèmes, notamment au satellite de télécommunication. Cela doit être réalisé de plus sans causer de brouillage pour les liaisons avec les autres systèmes. Il est donc nécessaire que les signaux par liaisons radio-fréquence soient robustes au brouillage, sans brouiller les autres émissions.

C'est pourquoi, selon l'invention, il est proposé que le terminal relais du satellite défilant effectue un étalement de spectre préalable à l'émission des signaux de données, permettant ainsi une bonne résistance au brouillage et respectant les contraintes de partage de spectre avec les autres signaux de communication.

Par ailleurs, l'invention a également pour objet un terminal relais disposé sur un satellite défilant comprenant des moyens de télécommunication adaptés pour mettre en oeuvre le procédé conforme à l'invention.

L'invention a encore pour objet un satellite défilant, comportant un terminal relais et mettant en oeuvre le procédé conforme à l'invention, ainsi qu'une station de bas terrestre, comprenant des moyens de télécommunication adaptés pour mettre en oeuvre le procédé conforme à l'invention.

L'invention a enfin pour objet un système de communications entre un satellite défilant et une station de base terrestre et mettant en oeuvre le procédé conforme à l'invention.

D'autres caractéristiques et avantages de l'invention apparaîtront au cours de la description suivante d'un de ses modes de réalisation, donné à titre d'exemple non limitatif, en regard des dessins joints.

Sur les dessins :
- la figure 1 est un diagramme représentant de manière schématique les liaisons dans un réseau dans lequel un procédé conforme à l'invention est mis en oeuvre ;
- la figure 2 est un organigramme représentant un procédé conforme à l'invention ;
- la figure 3 est un organigramme représentant un procédé selon une variante de l'invention.

Sur les différentes figures, les mêmes références désignent des éléments identiques ou similaires.

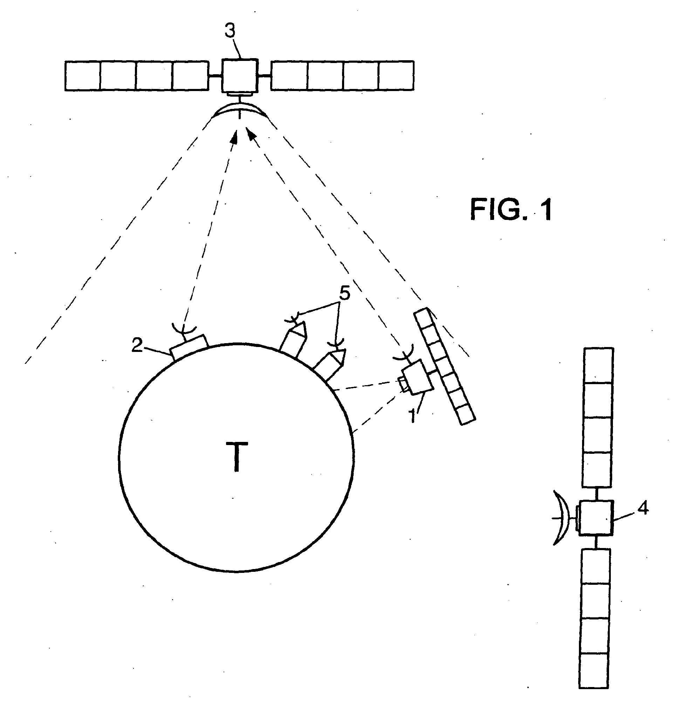

La figure 1 représente un réseau de communication dans lequel au moins un satellite défilant 1 communique, à l'aide d'un terminal relais intégré sur le satellite défilant 1, avec au moins une station de base terrestre 2 par l'intermédiaire d'au moins un satellite de télécommunication 3. Le satellite de télécommunication 3 peut se trouver sur une orbite géosynchrone, voire même géostationnaire. Cette disposition particulière permet notamment une liaison permanente et continue avec la station de base terrestre 2.

Conformément à l'invention, on peut prévoir au moins un deuxième satellite de télécommunication 4, avantageusement géostationnaire de façon à fournir une couverture globale de l'orbite du satellite défilant 1 tout autour de la Terre notée T. Ainsi, le satellite défilant 1 peut être contacté à tout instant ou bien transmettre des données en temps réel. Par exemple, le satellite défilant 1 peut être un satellite de mesure qui peut faire des visualisations de régions de la Terre, les images et/ou les données recueillies pouvant être transmises à la station de base 2 dès leur obtention. Il n'est donc pas nécessaire d'attendre que le satellite repasse en vue d'une station de base 2.

Par ailleurs, conformément à l'invention, le satellite de télécommunication 3 peut fournir des données ou permettre des communications téléphoniques entre différentes unités terrestres. Il est entendu par unités terrestres des dispositifs de communication disposés sur Terre, et pouvant communiquer entre eux. Comme illustré, le satellite de télécommunication 3 peut également être un satellite diffusant des signaux télévisuels, des programmes télévisuels reçus au moyen d'unités terrestres, ici des antennes paraboliques 5. Selon une variante, le satellite de télécommunication 3 transmet des signaux de téléphonie entre des terminaux terrestres, par exemple des signaux vocaux dans le cadre de liaisons satellitaires.

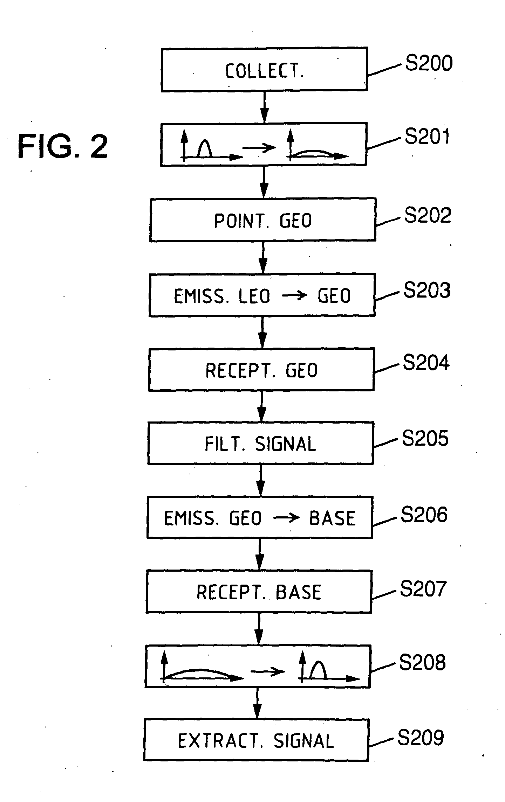

La figure 2 illustre un exemple de procédé de transmission de données collectées par le satellite défilant 1, au cours d'une première étape S200 dite de collecte (COLLECT.) comprenant la photographie d'une zone par exemple. Ensuite, le satellite défilant 1 effectue des traitements de données, et en particulier un étalement du spectre à l'étape S201. Cet étalement de spectre peut être effectué en multipliant le signal par une séquence binaire pseudo aléatoire, ayant une fréquence supérieure à la fréquence principale du signal de données. On peut utiliser des séquences binaires connues comme des séquences de Gold ou des m-séquences.

Ces séquences prennent deux valeurs par exemple -1 et 1. Ainsi, le signal de données est codé et voit son spectre élargi en raison de la fréquence de la séquence pseudo aléatoire. Lors de la réception à la station de base 2, à l'étape S208, le signal sera désétalé en remultipliant ce signal par la même séquence. Pour synchroniser cette séquence avec le signal, des en-têtes de synchronisation peuvent être insérés dans les paquets de données pour assurer un désétalement correct.

Cette nouvelle multiplication permet de rétablir le signal. En effet, si les deux séquences sont bien synchronisées, le résultat de leur produit est égal à 1 à chaque instant. Par ailleurs, l'ensemble des interférences pouvant être intervenues au cours de l'envoi subissent uniquement le deuxième étalement. Ainsi, le niveau des interférences est fortement diminué. Grâce à ces dispositions, le signal est robuste au brouillage et aux interférences pouvant intervenir au cours de l'envoi, de manière suffisamment satisfaisante pour notamment remplir les conditions de l'article 4 du Règlement des Radiocommunications, évoqué auparavant.

Afin d'éviter de gêner d'autres satellites adjacents au satellite géostationnaire 3, le terminal relais du satellite défilant 1 en charge des communications comprend un dispositif d'émission, tel une antenne, très directif. A l'étape S202 (POINT. GEO), le terminal relais du satellite défilant 1 dirige cette antenne en direction du satellite de télécommunication 3 géostationnaire. Cette étape de pointage peut être effectuée en parallèle de l'étape de préparation des données S201, ou à la suite de cette étape. Par ailleurs, cette étape de pointage peut être effectuée tout au long de la transmission des données à l'étape S203 (EMISS. LEO-> GEO), de façon à maintenir l'antenne pointée vers le satellite de télécommunication 3 au moins tout au long de l'étape d'émission.

En outre, il est possible de prévoir un décalage fréquentiel du signal de données émis afin de tenir compte de la vitesse de défilement du satellite défilant 1 relativement au satellite géostationnaire 3. En effet, étant donnée la grande vitesse du satellite défilant 1 relativement à la Terre et au satellite géostationnaire, de l'ordre de 7km/s, la fréquence du signal émis est différente de la fréquence du signal reçu. Pour remédier à ce problème, il est possible de décaler le spectre du signal fréquentiellement d'un écart fréquentiel fonction d'une vitesse relative du satellite défilant 1 par rapport au satellite de télécommunication 2. Ce décalage peut être effectué en boucle ouverte, en fonction des éphémérides respectives du satellite défilant 1 et du satellite de télécommunication 3. Il est également possible d'effectuer un calcul local en boucle fermée sur la base d'une rampe Doppler. Cette opération permet de ne pas avoir à réserver une bande spectrale plus large que nécessaire au niveau du satellite de télécommunication géostationnaire 3.

Ce décalage fréquentiel doit être effectué avant l'étape d'émission du signal, éventuellement avant l'étape d'étalement du spectre.

Une fois le signal par liaisons radio-fréquence reçu par le satellite de télécommunication 2 (RECEPT. GEO, S204), ce signal peut être filtré, et traité par le satellite de télécommunication 3 au cours de l'étape optionnelle de filtrage S205 (FILT. SIGNAL), et est ensuite réémis en direction de la Terre, après amplification lors de l'étape S206 (EMISS. GEO -> BASE). Lorsque la charge utile du satellite de télécommunication 2 est transparente, elle n'effectue pas de filtrage ni de traitement spécifique associé.

La station de base 2 terrestre reçoit ce signal à l'étape S207 (RECEPT. BASE), le désétale (S208), comme indiqué plus haut. Enfin, les données sont extraites du signal par liaison radio-fréquence lors d'une étape d'extraction S209 (EXTRACT. SIGNAL).

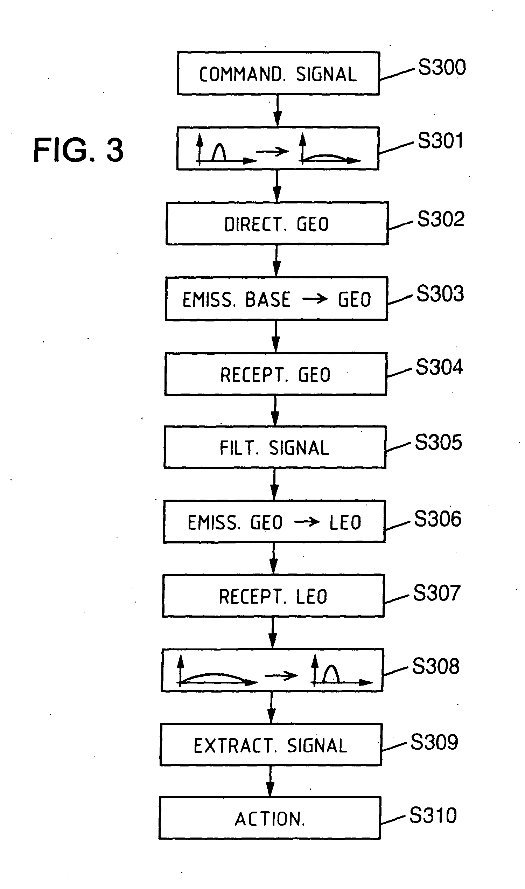

Selon une variante de l'invention illustrée par la figure 3, la communication peut être effectuée de la station de base 2 vers le satellite défilant 1 de manière semblable à celle décrite ci-dessus pour la communication du satellite défilant 1 vers la station de base 2. La station de base 2 peut ainsi émettre à destination du satellite de télécommunication 3 un signal par liaison radio-fréquence contenant des données de commande, comprenant des informations de mission pour le satellite défilant 1, le satellite de télécommunication 3 retransmettant ce signal vers le terminal relais du satellite défilant 1. De manière similaire, ce signal par liaison radio-fréquence subit au préalable un étalement de spectre, pour limiter les interférences. Cela est utile notamment pour fournir des ordres de mission au satellite défilant 1, ou pour réguler sa position.

Ces radiocommunications peuvent être réalisées simultanément à la communication de données en provenance du satellite défilant 1, ou en mode «half-duplex», c'est-à-dire, le satellite défilant 1 et la station de base 2 émettent tour à tour.

Ainsi, à l'étape S300, un signal de commande est préparé par la station de base 2 (COMNIAND. SIGNAL). Puis le signal de données subit un étalement de spectre comme expliqué auparavant (S301). La station de base 2 dirige alors son antenne vers le satellite de télécommunication 3 géostationnaire (DIRECT GEO, S302), et émet le signal par liaisons radio-fréquence, à l'étape S303 (EMISS. BASE -> GEO).

Une fois le signal reçu par le satellite de télécommunication géostationnaire 3 (RECEPT. GEO S304), le signal peut être optionnellement filtré et traité par le satellite de télécommunication géostationnaire 3 au cours de l'étape de filtrage S305 (FILT. SIGNAL), puis le signal est réémis à destination du satellite défilant 1 (EMISS GEO-> LEO, S306) après amplification.

Le signal est reçu par le satellite défilant 1 (RECEPT. SIGNAL, S307) qui désétale le signal en utilisant la même séquence binaire à l'étape S308. Puis, l'ordre de commande est extrait du signal (EXTRACT. SIGNAL, S309) et le satellite défilant 1 effectue l'action commandée au cours d'une étape d'actionnement S310 (ACTION.). Grâce à ce procédé, on peut effectuer des commandes à tout moment pour commander le satellite défilant 1. Il n'est pas nécessaire d'attendre que le satellite défilant 1 soit de nouveau en vue de la station de base 2.

En outre, la bande passante requise pour ce type de signaux est réduite. En conséquence, l'allocation sur un satellite de télécommunication 3, éventuellement géostationnaire, non dédié permet simplement une liaison efficace entre la Terre et un ou plusieurs satellites défilants 1 formant une constellation.

Par ailleurs, comme les étapes de pointage ou de traitement des données requièrent une puissance de calcul importante, il est possible de prévoir des plages de communication pour des satellites défilants 1 ayant des capacités plus limitées. Ces plages de télécommunication peuvent être, par exemple, les instants durant lesquels le satellite défilant 1 passe au-dessus des pôles ou des océans.

## Revendications

1. Procédé de transmission de données par liaisons radio-fréquence pour réaliser une communication d'un premier type entre au moins un terminal relais et une station de base (2) terrestre, le terminal relais étant disposé sur un satellite défilant (1) sur une première orbite,
le procédé comprenant les étapes consistant à :
(a) émettre (S203) un signal de données par liaisons radio-fréquence depuis le terminal relais du satellite défilant (1) vers un satellite de télécommunication (3) disposé sur une seconde orbite d'altitude supérieure à la première orbite ;
(b) réceptionner (S204) ledit signal de données par liaisons radio-fréquence sur le satellite de télécommunication (3) ;
(c) transmettre (S206) depuis le satellite de télécommunication (3) vers la station de base (2) ledit signal par liaisons radio-fréquence émis par le terminal relais (1),
**caractérisé en ce que** le procédé comprend de plus
une étape (d) d'étalement de spectre (S201) appliqué par le terminal relais (1) sur le signal de données par liaisons radio-fréquence préalable à l'étape (a) ;
une étape (e) de télécommunication, effectuée de manière simultanée avec au moins les étapes (b) et (c), entre le satellite de télécommunication (3) et des unités terrestres (5), selon une communication d'un second type, distinct du premier type de communication, sans interférences avec la réception et la transmission du signal par liaisons radio-fréquence effectuées aux étapes (b) et (c) respectivement.

2. Procédé de transmission de données selon la revendication 1, comprenant de plus une étape de pointage (S202) du satellite de télécommunication (3) préalable à l'étape (a), au cours de laquelle le terminal relais dirige un dispositif d'émission vers le satellite de télécommunication (3).

3. Procédé de transmission de données selon la revendication 2, suivant lequel le terminal relais maintient le dispositif d'émission pointé vers le satellite de télécommunication (3) au moins tout au long de l'étape (a).

4. Procédé de transmission de données selon l'une quelconque des revendications précédentes, suivant lequel l'étape (d) d'étalement de spectre comprend la multiplication du signal de données par une séquence binaire pseudo aléatoire.

5. Procédé de transmission de données selon la revendication 4, suivant lequel la séquence binaire est l'une parmi des séquences de Gold, et des m-séquence.

6. Procédé de transmission de données selon l'une quelconque des revendications précédentes, comprenant en outre une étape (f) au cours de laquelle un spectre du signal est décalé fréquentiellement d'un écart fréquentiel qui est fonction d'une vitesse relative du satellite défilant (1) par rapport au satellite de télécommunication (3), l'étape (f) étant effectuée soit avant l'étape (a) soit avant l'étape (d).

7. Procédé de transmission de données selon l'une quelconque des revendications précédentes, suivant lequel la communication du second type comprend au moins l'un parmi les suivants : la diffusion de signaux télévisuels, la communication de signaux de téléphonie entre des terminaux terrestres (5).

8. Procédé de transmission de données selon l'une quelconque des revendications précédentes, suivant lequel la station de base (2) émet (S303) à destination du satellite de télécommunication (3) un signal par liaisons radio-fréquence contenant des données de commande, comprenant des informations de mission pour le satellite défilant (1), le satellite de télécommunication (3) retransmettant (S306) ce signal vers le terminal relais du satellite défilant, le signal par liaisons radio-fréquence subissant au préalable un étalement de spectre (S301).

9. Procédé de transmission de données selon l'une quelconque des revendications précédentes, suivant lequel le satellite de télécommunication (3) effectue un filtrage (S205, S305) sur le signal par liaisons radio-fréquence avant de le réémettre.

10. Terminal relais, disposé sur un satellite défilant (1), comprenant des moyens de télécommunication adaptés pour mettre en oeuvre le procédé selon l'une quelconque des revendications 1 à 9 précédentes.

11. Satellite défilant (1), comportant un terminal relais selon la revendication 10 et mettant en oeuvre le procédé suivant l'une quelconque des revendications 1 à 9 précédentes.

12. Station de base terrestre (2), comprenant des moyens de télécommunication adaptés pour mettre en oeuvre le procédé selon l'une quelconque des revendications 1 à 9 précédentes.

13. Système de communications entre un satellite défilant (1) selon la revendication 11 et une station de base (2) terrestre selon la revendication 12 et mettant en oeuvre le procédé suivant l'une quelconque des revendications 1 à 9 précédentes.

## Claims

1. Process for the transmission of data via radio frequency links in order to carry out a communication of a first type between at least one relay terminal and a terrestrial base station (2), the relay terminal being placed on a moving satellite (1) In a first orbit,
the process comprising the steps consisting of:
(a) emitting (S203) a data signal via radio frequency links from the relay terminal of the moving satellite (1) towards a telecommunications satellite (3) placed in a second orbit at higher altitude than the first orbit;
(b) receiving (S204) said data signal via radio frequency links on the telecommunications satellite (3);
(c) transmitting (S206) from the telecommunications satellite (3) to the base station (2) said signal via radio frequency links emitted by the relay terminal (1),
**characterised in that** the process additionally comprises
a step (d) of spectrum spreading (S201) applied by the relay terminal (1) to the data signal via radio frequency links prior to step (a);
a step (e) of telecommunication, carried out simultaneously with at least steps (b) and (c), between the telecommunications satellite (3) and terrestrial units (5), according to a communication of a second type, distinct from the first type of communication, without interference with the reception and transmission of the signal via radio frequency links carried out in steps (b) and (c) respectively.

2. Process for the transmission of data according to claim 1, additionally comprising a step of aiming (S202) the telecommunications satellite (3) prior to step (a), during which the relay terminal directs an emitting device towards the telecommunications satellite (3).

3. Process for the transmission of data according to claim 2, according to which the relay terminal maintains the emitting device aimed at the telecommunications satellite (3) at least for the duration of step (a).

4. Process for the transmission of data according to any one of the preceding claims, according to which step (d) of spectrum spreading comprises the multiplication of the data signal via a pseudorandom binary sequence.

5. Process for the transmission of data according to claim 4, according to which the binary sequence is one of the Gold sequences, and of the m-sequences.

6. Process for the transmission of data according to any one of the preceding claims, additionally comprising a step (f) during which a signal spectrum is frequency offset by a frequency gap that is a function of a relative velocity of the moving satellite (1) in relation to the telecommunications satellite (3), step (f) being carried out either before step (a), or before step (d).

7. Process for the transmission of data according to any one of the preceding claims, according to which the communication of the second type comprises at least one of the following: emitting of televisual signals, communication of telephony signals between terrestrial terminals (5).

8. Process for the transmission of data according to any one of the preceding claims, according to which the base station (2) emits (S303) in the direction of the telecommunications satellite (3) a signal via radio frequency links containing command data, comprising mission information for the moving satellite (1), the telecommunications satellite (3) retransmitting (5306) this signal towards the relay terminal of the moving satellite, the signal via radio frequency links being previously subjected to spectrum spreading (S301).

9. Process for the transmission of data according to any one of the preceding claims, according to which the telecommunications satellite (3) carries out filtering (S205, S305) on the signal via radio frequency links before reemitting it.

10. Relay terminal, placed on a moving satellite (1), comprising telecommunication means suitable for implementing the process according to any one of the preceding claims 1 to 9.

11. Moving satellite (1), comprising a relay terminal according to claim 10 and implementing the process according to any one of the preceding claims 1 to 9.

12. Terrestrial base station (2), comprising telecommunication means suitable for implementing the process according to any one of the preceding claims 1 to 9.

13. System of communications between a moving satellite (1) according to claim 11 and a terrestrial base station (2) according to claim 12 and implementing the process according to any one of the preceding claims 1 to 9.

## Patentansprüche

1. Verfahren zur Datenübertragung über Radiofrequenz-Verbindungen, um eine Kommunikation von einem ersten Typ zwischen wenigstens einem Relais-Terminal und einer terrestrischen Basistation (2) herzustellen, wobei das Relais-Terminal auf einem Umlaufsatelliten (1) auf einer ersten Umlaufbahn angeordnet ist,
wobei das Verfahren die folgenden Schritte umfasst:
(a) Senden (S203) eines Datensignals über Radiofrequenz-Verbindungen von dem Relais-Terminal des Umlaufsatelliten (1) zu einem Telekommunikations-Satelliten (3), der auf einer zweiten Umlaufbahn mit einer größeren Höhe als die erste Umlaufbahn angeordnet ist,
(b) Empfangen (S204) dieses Datensignals über Radiofrequenz-Verbindungen auf dem Telekommunikatlons-Satelliten (3),
(c) Übertragen (S206) dieses von dem Relals-Terminal (1) gesendeten Signals über Radiofrequenz-Verbindungen von dem Telekommunlkations-Satelliten (3) zu der Basisstation (2),
**dadurch gekennzeichnet, dass** das Verfahren weiter umfasst
einen Schritt (d) einer Spektrumsspreizung (S201), der von dem Relais-Terminal (1) auf das Datensignal über Radiofrequenz-Verbindungen vor dem Schritt (a) angewendet wird,
einen Telekommunikations-Schritt (e), der simultan mit wenigstens den Schritten (b) und (c) ausgeführt wird, zwischen dem Telekommunikations-Satelliten (3) und terrestrischen Einhelten (5), gemäß einer Kommunikation von einem zweiten Typ, der sich vom ersten Typ der Kommunikation unterscheidet, ohne Interferenzen mit dem/der in den Schritten (b) und (c) jeweils ausgeführten Empfang und Übertragung des Signals über Radiofrequenz-Verbindungen,

2. Verfahren zur Datenübertragung nach Anspruch 1,
umfassend weiter einen Ausrichtungs-Schritt (202) des Telekommunikatlons-Satelliten (3) vor dem Schritt (a), Im Verlaufe dessen das Relais-Terminal eine Sendevorrichtung auf den Telekommunikations-Satelliten (3) richtet.

3. Verfahren zur Datenübertragung nach Anspruch 2,
wobei das Relais-Terminal wenigstens während des ganzen Schritts (a) die Sendevorrichtung auf den Telekommunikations-Satelliten (3) gerichtet hält.

4. Verfahren zur Datenübertragung nach einem der vorhergehenden Ansprüche,
wobei der Schritt (d) der Spektrumsspreizung die Multiplikation des Datensignals mit einer pseudo-zufälligen Binärsequenz umfasst.

5. Verfahren zur Datenübertragung nach Anspruch 4,
wobei die Binärsequenz eine aus Gold-Sequenzen und m-Sequenzen ist.

6. Verfahren zur Datenübertragung nach einem der vorhergehenden Ansprüche, umfassend weiter einen Schritt (f) im Verlaufe dessen ein Spektrum des Signals um eine Frequenzspanne frequenzverschoben wird, die von einer Relativgeschwindigkeit des Umlaufsatelliten (1) in Bezug auf den Telekommunikations-Satelliten (3) abhängt, wobei der Schritt (f) vor Schritt (a) oder vor Schritt (d) ausgeführt wird.

7. Verfahren zur Datenübertragung nach einem der vorhergehenden Ansprüche, wobei die Kommunikation vom zweiten Typ wenigstens eine der Folgenden umfasst: die Ausstrahlung von Fernseh-Signalen, die Übermittlung von Telefonsignalen zwischen terrestrischen Terminals (5).

8. Verfahren zur Datenübertragung nach einem der vorhergehenden Ansprüche, wobei die Basisstation (2) ein Signal über Radiofrequenzverbindungen zum Telekommunikations-Satelliten (3) sendet (S303), welches Befehlsdaten umfasst, welche Missionsinformationen für den Umlaufsatelliten (1) umfassen, wobei der Telekommunikations-Satellit (3) dieses Signal zu dem Relais-Terminal des Umlaufsatelliten rücküberträgt (S306), und wobei das Signal über Radiofrequenz-Verbindungen zuvor einer Spektrumssprelzung unterzogen wird (S301).

9. Verfahren zur Datenübertragung nach einem der vorhergehenden Ansprüche, wobei der Telekommunikations-Satellit (3) eine Filterung (S205, S305) des Signals über Radiofrequenz-Verbindungen durchführt, bevor er es wieder sendet.

10. Relais-Terminal, angeordnet auf einem Umlaufsatelliten (1), umfassend Mittel zur Telekommunikation, die dazu ausgebildet sind, das Verfahren nach einem der vorigen Ansprüche 1 bis 9 durchzuführen.

11. Umlaufsatellit (1), umfassend einen Relais-Terminal nach Anspruch 10, wobei der Umlaufsatellit (1) das Verfahren nach einem der vorigen Ansprüche 1 bis 9 durchführt.

12. Terrestrische Basisstation (2), umfassend Mittel zur Telekommunikation, die dazu ausgebildet sind, das Verfahren nach einem der vorigen Ansprüche 1 bis 9 durchzuführen.

13. System zur Kommunikation zwischen einem Umlaufsatelliten (1) nach Anspruch 11 und einer terrestrischen Basisstation (2) nach Anspruch 12, welches das Verfahren nach einem der vorigen Ansprüche 1 bis 9 durchführt.
